# EUROPÄISCHE PATENTSCHRIFT

(11) **EP 3 215 392 B1**
(45) Veröffentlichungstag und Bekanntmachung des Hinweises auf die Patenterteilung: **05.12.2018**
(21) Anmeldenummer: 15781055.7
(22) Anmeldetag: 07.10.2015
(51) Int. Cl.: B60L 5/39

(54) **STROMABNEHMER EINES SCHIENENFAHRZEUGES**
CURRENT COLLECTOR OF A RAIL VEHICLE
PANTOGRAPHE D'UN VÉHICULE FERROVIAIRE

(30) Priorität: 05.11.2014 AT 508062014
(43) Veröffentlichungstag der Anmeldung: 13.09.2017
(73) Patentinhaber: Siemens Aktiengesellschaft Österreich, 1210 Wien (AT)
(72) Erfinder: BRANDSTETTER, Jochen, A-8010 Graz (AT); MÜLLER, Johannes, A-8043 Graz (AT); SCHLOFFER, Patrick, A-8302 Edelsgrub (AT)
(74) Vertreter: Maier, Daniel Oliver
(86) Internationale Anmeldenummer: PCT/EP2015/073148
(87) Internationale Veröffentlichungsnummer: WO 2016/071065

(56) Entgegenhaltungen:
- EP-A1- 0 990 549
- DE-A1- 4 438 720
- DE-A1-102013 207 824
- DE-B3-102004 019 252
- DE-C- 370 674
- DE-U- 7 419 024
- DE-U1- 9 421 497

## Beschreibung

### Technisches Gebiet

Die Erfindung betrifft einen Stromabnehmer für ein Schienenfahrzeug, mit einem an einem Schwingarm angeordneten Schleifschuh, welcher Schwingarm an einem Auflagerpunkt mit dem Schienenfahrzeug verbindbar ist und der Schleifschuh mittels Federkraft gegen eine Kontaktfläche einer dritten Schiene pressbar ist, wobei ein Anschlag vorgesehen ist, um einen Bewegungsbereich des Schwingarmes zu begrenzen, sowie ein Schienenfahrzeug-Stromabnehmer-System und ein Verfahren zur Regelung eines Bewegungsbereiches eines Stromabnehmers.

### Stand der Technik

Insbesondere im Bereich von Untergrund-Bahnen und Schnell-Bahnen werden zur elektrischen Stromversorgung der Triebwagen und Bordelektronik keine Oberleitungssysteme sondern Stromschienen, auch dritte Schienen genannt, herangezogen. Diese verlaufen im Wesentlichen parallel zu den tragenden Schienen und führen Strom in Wechselspannung oder Gleichspannung. Zur Übertragung des Stroms sind an den Schienenfahrzeugen Stromabnehmer angeordnet, welche in Kontakt mit der Stromschiene stehen.

In der Folge werden dritte Schienen näher erläutert, welche seitlich versetzt zu den tragenden Schienen verlaufen. Ein gesamter Stromschienenverlauf setzt sich aus einzelnen Stromschienen-Elementen zusammen, wobei ein solches Element eine Kontaktfläche für einen Stromabnehmer und gegebenenfalls Infrastruktur, insbesondere Verkleidungen zum Schutz vor Kontakt mit der dritten Schiene, aufweist. Die Kontaktfläche kann dabei entweder auf der dem Gleis zugewandten Seite, auf der dem Schienenfahrzeug zugewandten Seite oder auf der dem Gleis abgewandten Seite der dritten Schiene angeordnet sein. Jeweils am Beginn und am Ende eines solchen Stromschienen-Elementes ist die Kontaktfläche üblicher Weise rampenförmig ausgebildet, sodass der Kontakt zwischen Stromabnehmer und Kontaktfläche nicht ruckartig hergestellt wird.

Ein Stromabnehmer ist üblicherweise am Drehgestell eines Schienenfahrzeuges befestigt und besteht im Wesentlichen aus einem Schwingarm, an dem ein Schleifschuh angeordnet ist, welcher Schleifschuh an der Kontaktfläche der dritten Schiene anliegt.

Um die Bewegungen des Schienenfahrzeuges in einfacher Art und Weise auszugleichen ohne den Kontakt zwischen Schleifschuh und dritter Schiene zu unterbrechen, ist der Schwingarm mittels Federkraft so verspannt, dass der Schleifschuh an die Kontaktfläche gepresst wird. In einem Bereich zwischen zwei Stromschienen-Elementen, in dem sich also der Schwingarm nicht auf der Stromschiene abstützt, wird der Bewegungsbereich des Schwingarmes durch einen Anschlag beschränkt. Liegt der Schwingarm am Anschlag an, so folgt der Schwingarm der Bewegung des Drehgestells und "fädelt" erst bei der Anfangsrampe des nächsten Stromschienen-Elementes wieder in die Stromschiene ein, sodass der Schwingarm nicht mehr am Anschlag anliegt und die Federkraft wieder zum Tragen kommt und der Schwingarm weitest gehend unabhängig vom Drehgestell schwingungsfähig ist.

Es wirken sowohl dynamische Belastungen, wie beispielsweise die Kräfte bei Kurvenfahrten, als auch statische Belastungen, wie beispielsweise die aus der Zuladung resultierende Gewichtskraft, etwa resultierend aus den beförderten Personen, auf das Drehgestell ein. Während des Betriebs setzt sich die Belastung des Drehgestells also aus einem dynamischen und einem statischen, von der aktuellen Zuladung abhängigen, Anteil zusammen.

Der Nachteil des Stands der Technik liegt nun darin, dass das Drehgestell durch hohe dynamische Belastungen, wie bei Kurvenfahrten, oder einer hohen statischen Belastung, und gegebenenfalls einer diese verstärkenden dynamischen Belastung, während des Betriebs seine Position relativ zur Kontaktfläche verändert, sodass es ungewollt zu einem Kontakt zwischen Anschlag und Schwingarm kommen kann, der dazu führt, dass der Schleifschuh sich von der Kontaktfläche löst und die Gefahr einer Lichtbogenbildung zwischen dritter Schiene und Schleifschuh stark erhöht ist.

Im umgekehrten Fall, also bei Durchfahren niedriger Belastung, wie bei einer gegensätzlich gekrümmten Kurve oder bei einer niedrigen statischen Belastung, und gegebenenfalls einer diese verringernden dynamischen Belastung, liegt die Gefahr darin, dass im Bereich zwischen zwei Stromschienen-Elementen, wenn der Schwingarm am Anschlag anliegt, der Schleifschuh, aufgrund der Position des Drehgestells relativ zur dritten Schiene, mit der Infrastruktur der Schiene kollidiert bzw. der Schleifschuh beim "Einfädeln" in die Stromschiene beschädigt wird.

Bis jetzt sind nur komplexe Lösungen bekannt, wie beispielsweise das Verwenden von aufwändigen Referenzsystemen oder aber eine ungefederte Anbringung des Schwingarmes. Diese Lösungen sind jedoch konstruktiv aufwändig und daher mit hohen Kosten verbunden.

Aus dem Stand der Technik ist beispielsweise die DE 74 19 024 U bekannt, welche einen Stromabnehmer mit Hubbegrenzung offenbart, wobei ein als hydraulischer oder pneumatischer Dämpfer ausgebildeter Anschlag vorgesehen ist.

Weiterhin zeigt die DE 10 2004 019 252 B3 einen Seitenstromabnehmer mit einem Schleifschuh, der mittels eines Aktuators schwenkbar ausgeführt ist. Es ist eine Klinkenvorrichtung mit einem Hebel, einem Lager und einer Feder offenbart, mit welcher der Schleifschuh verriegelbar bzw. entriegelbar ist.

In der DE 10 2013 207 824 A1 ist ein Stromabnehmer mit einem Schleifstück beschrieben, wobei das Schleifstück mittels einer Anpresseinrichtung an eine Stromschiene gedrückt werden kann. Die Anpressvorrichtung weist eine Feder sowie einen Dämpfer auf.

Ferner zeigt die DE 370 674 C einen Seitenstromabnehmer, dessen Bewegungen mittels eines Anschlags begrenzt werden. Der Seitenstromabnehmer umfasst einen Gleitschuh und einen Tragarm, der ein auswechselbares Anschlagstück aufweist.

In der DE 44 38 720 A1 ist ein Stromabnehmer mit einer Anordnung zur Detektion von Stromschienenlücken offenbart, die einen Näherungsschalter bzw. einen Näherungssensor aufweist.

Die EP 0 990 549 A1 zeigt einen Stromabnehmer mit einer Schwinge, die mittels eines Aktuators an eine Stromschiene angelegt und mittels einer Federvorspannkraft gegen die Stromschiene gedrückt werden kann.

Darüber hinaus ist die DE 94 21 497 U1 bekannt, in der ein Seitenstromabnehmer mit Aktuatoren und Federn beschrieben ist, dessen Schleifstück sowohl von unten an eine Stromschiene als auch seitlich an eine Brückenleitschiene gedrückt werden kann.

### Aufgabe der Erfindung

Es ist daher eine Aufgabe der Erfindung die Nachteile des Stands der Technik zu überwinden und einen Stromabnehmer für ein Schienenfahrzeug vorzuschlagen, welcher auch unter wechselnder statischer und/oder dynamischer Belastung während des Betriebs eine hohe Ausfallssicherheit aufweist. Des Weiteren soll sich die Erfindung durch eine einfache und robuste Konstruktion, eine kostengünstige Fertigung und eine hohe Lebensdauer auszeichnen.

### Darstellung der Erfindung

Diese Aufgabe wird durch einen Stromabnehmer mit den Merkmalen des Patentanspruchs 1 gelöst. Vorteilhafte Ausgestaltungen der Erfindung sind in den jeweiligen abhängigen Ansprüchen definiert.

Die Erfindung betrifft einen Stromabnehmer für ein Schienenfahrzeug, mit einem an einem Schwingarm angeordneten Schleifschuh, welcher Schwingarm an einem Auflagerpunkt mit dem Schienenfahrzeug verbindbar ist und der Schleifschuh mittels Federkraft gegen eine Kontaktfläche einer dritten Schiene pressbar ist, wobei ein Anschlag vorgesehen ist, um einen Bewegungsbereich des Schwingarmes zu begrenzen.

Erfindungsgemäß ist dabei vorgesehen, dass die Position des Anschlags während des Betriebs in Abhängigkeit von einer statischen und/oder dynamischen Belastung eines Drehgestells des Schienenfahrzeuges variierbar ist, um während des Betriebs die Anlage des Schleifschuhs an die Kontaktfläche der dritten Schiene sicher zu stellen und/oder eine Kollision des Schleifschuhs mit der dritten Schiene zu verhindern.

Durch die Einbeziehung der wechselnden statischen und/oder dynamischen Belastung in die Positionierung des Anschlages, kann die Position des Anschlages entsprechend der aktuellen Belastung variiert werden. Da der Anschlag eine Grenze eines Bewegungsbereiches des Schwingarms darstellt, kann der Bewegungsbereich durch eine Änderung der Position des Anschlages beeinflusst werden.

So ist beispielsweise bei einem Stromabnehmer für von unten zu bestreichende dritte Schienen bei einer hohen statischen und/oder dynamischen Belastung der Anschlag derart verstellbar, dass der Schleifschuh an die Kontaktfläche anpressbar bleibt. Es wird also durch die Vergrößerung des Bewegungsbereiches des Schwingarmes verhindert, dass der Schwingarm zu früh am Anschlag anliegt und so die Anlage des Schleifschuhs an der Kontaktfläche unterbrochen wird.

In einem anderen Anwendungsfall, bei einem Stromabnehmer für von unten zu bestreichende dritte Schienen, bei dem eine niedrige Belastung vorliegt, ist der Anschlag derart verstellbar, dass der Schleifschuh, in einem Bereich zwischen zwei Schienen-Elementen, nicht mit der dritten Schiene bzw. mit der die dritte Schiene umgebenden Infrastruktur, wie Abdeckungen oder Isolierungen, kollidiert. Es wird also durch eine Verringerung des Bewegungsbereiches des Schwingarmes verhindert, dass der Schwingarm zu spät am Anschlag anliegt und so der Schleifschuh in ein Lichtraumprofil eindringt bzw. beim "Einfädeln" in das nächste Schienen-Element beschädigt wird.

Eine einfache Möglichkeit die statische und/oder dynamische Belastung während des Betriebs festzustellen, liegt in der Ermittlung eines Abstandes zwischen Auflagerpunkt und Kontaktfläche der dritten Schiene. Daher sieht eine Ausführungsvariante eines erfindungsgemäßen Stromabnehmers vor, dass die statische und/oder dynamische Belastung während des Betriebs als ein Höhenunterschied zwischen Auflagerpunkt und Kontaktfläche der dritten Schiene bestimmbar ist und/oder dass eine Vorrichtung vorgesehen ist, mittels derer der Höhenunterschied zwischen Auflagerpunkt und Kontaktfläche der dritten Schiene bestimmbar ist.

Zur Bestimmung des Höhenunterschiedes ist eine Vielzahl an verschiedenen Vorrichtungen denkbar, welche beispielsweise über optische oder mechanische Messsensoren verfügen. Da jedoch die Position des Auflagerpunktes in Relation zur Kontaktfläche der dritten Schiene ohne dynamische wechselnde Belastung bekannt ist, reicht es aus, die Differenz zwischen unbelastetem und belastetem Zustand zu ermitteln. Die Differenz kann dabei entweder über den Federweg einer Primärfederung oder über den Luftdruck einer Sekundärfederung eines Drehgestells eines Schienenfahrzeuges bestimmt werden. Daher ist in weiteren Ausführungsvarianten vorgesehen, dass es sich um eine Vorrichtung zur Bestimmung des Federwegs einer Primärfederung eines Drehgestells von Schienenfahrzeugen oder um eine Vorrichtung zur Bestimmung des Luftdruckes einer Sekundärfederung eines Drehgestells von Schienenfahrzeugen handelt.

Gemäß einer weiteren Ausführungsvariante der Erfindung, ist der Anschlag relativ zum Auflagerpunkt rotatorisch und/oder translatorisch bewegbar. Solche Bewegungen sind mechanisch besonders einfach realisierbar. Translatorische Bewegungen können etwa mit Kolben-Zylinder-Systemen, Linearmotoren oder Zahnstangen realisiert werden, rotatorische Bewegungen beispielsweise mit Schwenkarmen, Zahn- oder Schneckenrädern oder Klappen. Auch die Kombination von translatorischen und rotatorischen Bewegungen ist denkbar. Da der Auflagerpunkt ein festliegender Punkt des Schwingarmes, sowie des Drehgestells ist, wenn der Stromabnehmer an einem Drehgestell angeordnet ist, kann durch die Bewegung des Anschlages relativ zu dem Auflagepunkt, der Bewegungsbereich des Schwingarmes verändert werden.

In einer bevorzugten Ausführungsvariante eines erfindungsgemäßen Stromabnehmers ist vorgesehen, dass der Anschlag über einen mit Druck beaufschlagbaren Zylinder positionierbar ist. Dabei kann es sich bei dem Zylinder insbesondere um einen Hydraulik-Zylinder oder einen Pneumatik-Zylinder handeln, es sind jedoch auch Elektro-Zylinder denkbar. Die Druckzufuhr zu dem Zylinder kann dabei beispielsweise über eine Steuervorrichtung geregelt werden, sodass eine exakte Positionierung des Anschlages durch Veränderung des Druckes möglich ist. Damit lässt sich der Anschlag durch eine einfache mechanische Konstruktion zuverlässig und schnell positionieren.

Eine weitere bevorzugte Ausführungsvariante der Erfindung sieht vor, dass der Schwingarm einen auskragenden Abschnitt aufweist, welcher mit dem Anschlag kontaktierbar ist. Dadurch, dass der auskragende Abschnitt den Anschlag kontaktiert, kann die Position des Anschlages in Bezug auf den Auflagerpunkt, vorzugsweise in einer Vertikalrichtung, einfach eingestellt werden. Ein höherer Abstand zwischen Auflagerpunkt und Anschlag führt dazu, dass die Stellbewegungen zur Positionierung des Anschlages größer sind und somit eine weniger präzise Regelung notwendig ist. Der Winkel zwischen dem Schwingarm und dem auskragenden Abschnitt liegt dabei in einem Bereich zwischen 60° und 90°, bevorzugt zwischen 70° und 85°.

Gemäß einer weiteren bevorzugten Ausführungsvariante ist der Auflagerpunkt an einem Grundelement, beispielsweise einer Trägerplatte, angeordnet, welches Grundelement mit dem Drehgestell verbindbar ist. Es ist nicht zwingend notwendig, dass der Auflagerpunkt selbst an dem Schienenfahrzeug bzw. an dem Drehgestell des Schienenfahrzeuges angeordnet ist. Da der Auflagerpunkt der Bewegung des Schienenfahrzeuges folgen muss, ist der Auflagerpunkt an dem Grundelement angeordnet, die über Befestigungselemente an dem Schienenfahrzeug befestigbar ist. Es ist dabei genauso möglich, dass das Grundelement den Anschlag, eine Feder oder zusätzliche Elemente aufweist, welche für den Betrieb des Stromabnehmers notwendig sind. Durch das Grundelement ist eine einfache Assemblierung möglich, da der gesamte Stromabnehmer als Baugruppe vormontiert werden kann und erst im letzten Arbeitsschritt mit dem Drehgestell und entsprechenden Anschlüssen verbunden wird.

Die eingangs erwähnte Aufgabe wird auch durch ein System gelöst, das System umfassend ein Drehgestell eines Schienenfahrzeuges mit einer Primärfederung, einer Sekundärfederung sowie einem Auflagerpunkt und einem erfindungsgemäßen Stromabnehmer, wobei der Schwingarm mit dem Auflagerpunkt verbunden ist. Durch die Verbindung des Schwingarmes und des Drehgestells am Auflagerpunkt folgt der Schwingarm der Bewegung des Drehgestells, insbesondere der Einfederung der Primärfederung unter statischer und/oder dynamischer Belastung, in einfacher Art und Weise.

Um den Steuerungs- bzw. Regelungsaufwand zu vermindern und eine präzise Positionierung des Anschlages zu erreichen, sieht eine Ausführungsvariante eines erfindungsgemäßen Systems vor, dass eine mit dem Anschlag verbundene Steuereinrichtung vorgesehen ist, um die Positionierung des Anschlages zu regeln. Die Steuereinrichtung kann dabei nur einen Stromabnehmer ansprechen oder aber eine Reihe von Stromabnehmern, beispielsweise alle an einer Seite eines Drehgestells angeordneten Stromabnehmer. Die Steuereinrichtung wertet Informationen von beispielsweise Messvorrichtungen aus und steuert den Positioniermechanismus des Anschlags.

Zur Bestimmung der statischen und/oder dynamischen Belastung des Drehgestells während des Betriebs, welche als Grundlage für die Variation der Position des Anschlages verwendet wird, ist in weiteren Ausführungsvarianten vorgesehen, dass die Vorrichtung zur Bestimmung des Federwegs der Primärfederung und/oder die Vorrichtung zur Bestimmung des Luftdruckes der Sekundärfederung am Drehgestell angeordnet sind und die Vorrichtungen in Datenverbindung mit dem Anschlag bzw. mit der Steuereinrichtung steht. Es ist beispielsweise denkbar, dass die Vorrichtungen schon für andere Prozesse am Drehgestell angebracht sind und nur die ausgewerteten Daten an den Anschlag bzw. die Steuereinrichtung weitergeleitet werden, um den Anschlag in Abhängigkeit der statischen und/oder dynamischen Belastung zu positionieren.

Die Erfindung betrifft des Weiteren ein Verfahren zur Regelung eines Bewegungsbereichs eines Stromabnehmers an einem Schienenfahrzeug, der Stromabnehmer umfassend einen Schwingarm, welcher mittels Federkraft gegen eine dritte Schiene gepresst wird, mit einem Schleifschuh zur Anlage an die dritte Schiene, wobei der Schwingarm lagernd mit dem Schienenfahrzeug verbunden ist und die Bewegung des Schwingarms durch einen Anschlag begrenzt wird.

Um die eingangs gestellte Aufgabe zu lösen, ist erfindungsgemäß vorgesehen, dass während des Betriebs folgende Verfahrensschritte durchgeführt werden:
- Detektieren einer statischen und/oder dynamischen Belastung eines Drehgestells des Schienenfahrzeuges;
- Positionieren des Anschlages in Abhängigkeit von der statischen und/oder dynamischen Belastung des Drehgestells, sodass der Schleifschuh an einer Kontaktfläche der dritten Schiene anliegt und/oder eine Kollision des Schleifschuhs mit der dritten Schiene verhindert wird.

Durch die Detektion der statischen und/oder dynamischen Belastung, welche die Lage des Drehgestells beeinflusst und in weiterer Folge ausschlaggebend dafür ist, wann der Schwingarm an dem Anschlag anliegt, ist es nunmehr möglich die Position des Anschlages zu verändern und somit den Bewegungsbereich, in der der Schwingarm und damit der Schleifschuh gegen die dritte Schiene gepresst wird, an die aktuelle statische und/oder dynamische Belastung anzupassen. Damit kann einerseits der Bewegungsbereich des Schwingarmes vergrößert werden, so dass der Kontakt mit dem Anschlag nicht zum Abheben des Schleifschuhs führt und andererseits der Bewegungsbereich verkleinert werden, sodass der Schwingarm in einem Bereich zwischen zwei Schienen-Elementen den Anschlag sicher kontaktiert bevor es zu einer Kollision mit der dritten Schiene oder der Infrastruktur der dritten Schiene kommt.

Daher ist bei einer Ausführungsvariante eines erfindungsgemäßen Verfahrens vorgesehen, dass der Anschlag derart positioniert wird, dass der Bewegungsbereich des Schwingarms vergrößert wird, um bei einer hohen statischen und/oder dynamischen Last das Abheben des Schleifschuhs von der Kontaktfläche zu verhindern und/oder dass der Anschlag derart positioniert wird, dass der Bewegungsbereich des Schwingarmes verkleinert wird, um bei einer geringen statischen und/oder dynamischen Last eine Kollision des Schleifschuhs mit der dritten Schiene zu verhindern. Bei von oben zu bestreichenden dritten Schienen sind die Zusammenhänge zwischen dynamischer Belastung, Bewegungsbereich und Schadensfall entsprechend umgekehrt.

Da Zylinder, insbesondere Hydraulik- oder Pneumatik-Zylinder, besonders gut geeignet sind, um translatorische Bewegungen durchzuführen, sehen bevorzugte Ausführungsvarianten des Verfahrens vor, dass der Anschlag durch einen mit Druck beaufschlagbaren Zylinder ausgebildet ist und der Zylinder zur Verkleinerung der Bewegungsgrenze ausgefahren wird und/oder dass der Anschlag durch einen mit Druck beaufschlagbaren Zylinder ausgebildet ist und der Zylinder zur Vergrößerung der Bewegungsgrenze eingefahren wird.

Um die statische und/oder dynamische Belastung in einfacher Art und Weise zu bestimmen, ist in weiteren bevorzugten Ausführungsvarianten vorgesehen, dass der Federweg einer Primärfederung des Drehgestells des Schienenfahrzeuges gemessen wird und/oder dass der Luftdruck einer Sekundärfederung des Drehgestells des Schienenfahrzeuges gemessen wird. Über den Federweg bzw. den Luftdruck lassen sich schnell und einfach Rückschlüsse über die Position des Auflagerpunktes relativ zur dritten Schiene ziehen. So kann beispielsweise über den Luftdruck das Gewicht eines Waggonteiles bestimmt werden und über die Federkonstante der Primärfederung die Absenkung eines Fahrwerkrahmens berechnet werden.

### Kurzbeschreibung der Figuren

Zur weiteren Erläuterung der Erfindung wird im nachfolgenden Teil der Beschreibung auf die Figuren Bezug genommen, aus der weitere vorteilhafte Ausgestaltungen, Einzelheiten und Weiterbildungen der Erfindung zu entnehmen sind. Die Figuren sind als beispielhaft zu verstehen und sollen den Erfindungscharakter zwar darlegen, ihn aber keinesfalls einengen oder gar abschließend wiedergeben. Es zeigen:
- Fig. 1: eine schematische Darstellung eines Stromabnehmers bei einer Fahrt auf einer dritten Schiene nach dem Stand der Technik,
- Fig. 2: eine schematische Darstellung eines Stromabnehmers in einem Bereich zwischen zwei Elementen einer dritten Schiene nach dem Stand der Technik,
- Fig. 3: eine schematische Darstellung eines Stromabnehmers in einer tiefen Stellung nach dem Stand der Technik,
- Fig. 4: eine schematische Darstellung eines erfindungsgemäßen Stromabnehmers bei einer Fahrt auf einer dritten Schiene,
- Fig. 5: eine schematische Darstellung eines erfindungsgemäßen Stromabnehmers in einem Bereich zwischen zwei Elementen einer dritten Schiene,
- Fig. 6: eine schematische Darstellung eines erfindungsgemäßen Stromabnehmers in einer tiefen Stellung

### Ausführung der Erfindung

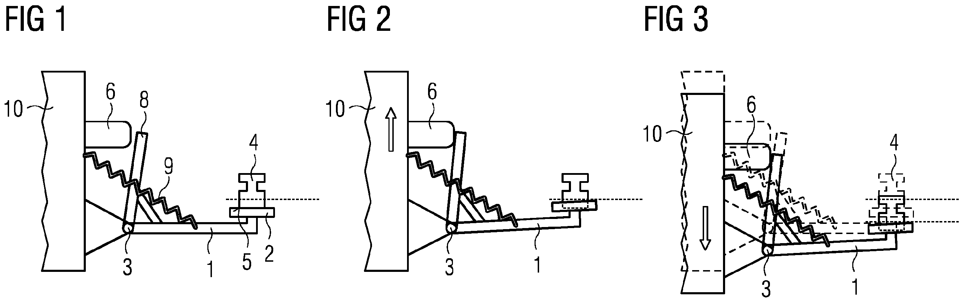

Die Figuren 1 bis 3 erläutern die der Erfindung zu Grunde liegende Problemstellung an Hand des Stands der Technik. Abgebildet ist jeweils ein Stromabnehmer für ein Schienenfahrzeug, welches über eine dritte Schiene 4 mit Strom versorgt wird, wobei es sich um einen die dritte Schiene von unten bestreichenden Stromabnehmer handelt, also die Unterseite der dritten Schiene 4, in Bezug auf das Schienenfahrzeug gesehen, als eine Kontaktfläche 5 ausgebildet ist. Die Kontaktfläche 5 wird von einem Schleifschuh 2 kontaktiert, über welchen der Strom abgegriffen wird. Der Schleifschuh 2 ist an einem Schwingarm 1 angeordnet, welcher an einem Auflagerpunkt 3 mit dem Schienenfahrzeug bzw. mit einem Drehgestell 10 des Schienenfahrzeuges verbunden ist.

Der Auflagerpunkt 3 dient im vorliegenden Ausführungsbeispiel nicht nur der Verbindung zwischen Winkelarm 1 und Drehgestell 10, sondern ist auch als ein Drehgelenk ausgebildet, über welches der Schwingarm 1 um eine Achse, welche Achse parallel zum Schienenverlauf verläuft, schwenkbar ist. In der in Figur 1 dargestellten Betriebsposition schließt der Schwingarm 1 mit einer Vertikalen einen Winkel von 90° ein.

Eine Feder 9, welche einerseits mit dem Schwingarm 1 und andererseits mit dem Drehgestell 10 verbunden ist, sorgt dafür, dass der Schleifschuh 2 mittels Federkraft gegen die Kontaktfläche 5 der dritten Schiene 4 gepresst wird. Durch die Feder 9 können so Unebenheiten und kleine Bewegungen des Drehgestells 10 ausgeglichen werden, ohne dass der Kontakt zwischen dem Schleifschuh 2 und der dritten Schiene 4 unterbrochen wird. In Figur 1 ist der Schleifschuh 2 mittels der von der Feder 9 erzeugten Federkraft gegen die dritte Schiene 4 gepresst, sodass ein auskragender Abschnitt 8 des Schwingarms 1 einen Anschlag 6 nicht kontaktiert. Somit ist der Schwingarm 1 in einem durch den Anschlag 6 fix begrenzten Bewegungsbereich frei beweglich, um an der dritten Schiene anliegen zu können. Dabei kann der oben beschriebene Winkel um etwa 5° bis 20° vom rechten Winkel abweichen.

Der Anschlag 6, welcher im vorliegenden Ausführungsbeispiel am Drehgestell 10 befestigt ist, ist unter anderem dafür gedacht, den Schwingarm 1 an seiner Bewegung in Richtung des Drehgestells 10 zu hindern, wenn zum gegenwärtigen Zeitpunkt keine dritte Schiene 4 vorhanden ist. Zu dieser Situation kommt es insbesondere dann, wenn das Schienenfahrzeug eine Weiche durchfährt oder einen Abschnitt an dem ein Stromschienen-Element endet und kurz darauf ein neues Stromschienen-Element beginnt. In diesem Fall liegt der auskragende Abschnitt 8 am Anschlag 6 an und der Schwingarm 1 folgt der Bewegung des Drehgestells 10.

Figur 2 zeigt jedoch einen Betriebszustand, in welchem der Stromabnehmer nach dem Stand der Technik versagt: Durch eine Belastung des Drehgestells 10, welche sich beispielsweise aus dem dynamischen Anteil der Belastung bei Kurvenfahrt und/oder aus einem statischen Anteil aufgrund geringer Beladung zusammensetzt, wird das Drehgestell 10 relativ zur dritten Schiene 4 angehoben (angedeutet durch den Pfeil nach oben), sodass in diesem Fall der Schleifschuh 2, wobei dies analog auch für den Schwingarm 1 gilt, ein Lichtraumprofil (Grenze Lichtraum = punktiert) der dritten Schiene 4 verletzt, da der auskragende Abschnitt 8 am Anschlag 6 anliegt und der Schwingarm 1 der Bewegung des Drehgestells 10 folgen muss. In anderen Worten ragt der Schleifschuh 2 bzw. der Schwingarm 1 in einen Raum, der nicht dafür vorgesehen ist und in dem andere Elemente angeordnet sind, beispielsweise Trageelemente für die dritte Schiene 4 oder Abdeckungen zum Schutz der dritten Schiene 4 vor Berührung und Beschädigung.

Die Verletzung des Lichtraumprofils kann mehrere Folgen bei der Einfahrt in das nächste Stromschienen-Element haben: Bei einer kleinen Verletzung kann das "Einfädeln" in das nächste Stromschienen-Element, welches meist durch eine Rampe erreicht wird, nicht gewährleistet werden, bei großen Verletzungen kann dies zu einer Beschädigung der dritten Schiene 4, der die dritte Schiene 4 umgebenden Infrastruktur, wie Abdeckungen, Isolatoren oder Haltevorrichtungen, oder zur Beschädigung des Schleifschuhs 2 bzw. des Schwingarmes 1 kommen.

In Figur 3 ist eine weiterer Betriebszustand dargestellt, in welchem die Verwendung eines Stromabnehmers nach dem Stand der Technik nachteilig ist: Zu sehen ist ein belastetes Drehgestell 10, gegeben beispielsweise durch eine Kurvenfahrt mit einem dynamischen Anteil, in der Regel kombiniert mit einem statischen Anteil, der aus hoher Beladung resultiert. Das Drehgestell 10 ist dadurch gegenüber der dritten Schiene 4 nach unten versetzt (angedeutet durch den Pfeil nach unten, sowie die strichlierte Darstellung des in Figur 1 beschriebenen Ursprungszustandes). Dadurch liegt der auskragende Abschnitt 8 bereits am Anschlag 6 an, ohne dass das Schienenfahrzeug einen Abschnitt ohne dritte Schiene 4 durchfährt. Das hat zur Folge, dass der Schleifschuh 2 nicht mehr mittels Federkraft an die Kontaktfläche 5 gepresst werden kann, da der Schwingarm 1 nun der Bewegung des Drehgestells 10 folgen muss und die Feder 9 außer Kraft gesetzt ist. So kann kein Strom abgegriffen werden und es kann zur Bildung eines Lichtbogens kommen, welcher zu Beschädigungen oder zur Zerstörung des Schleifschuhs 2 und/oder der dritten Schiene 4 führen kann.

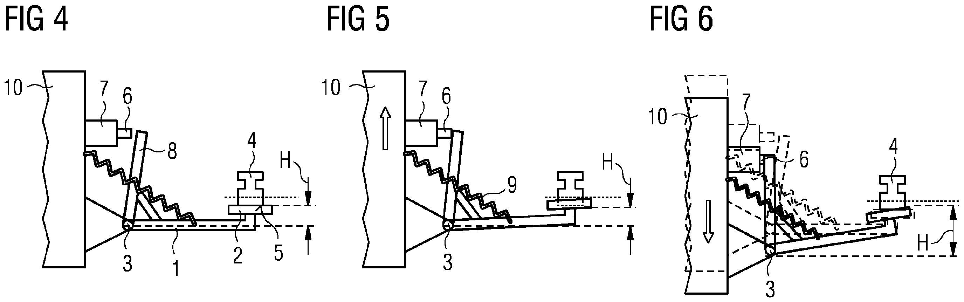

Die Figuren 4 bis 6 zeigen nun ebenfalls die zuvor beschriebenen Betriebszustände, jedoch mit einem erfindungsgemäßen Stromabnehmer, welcher mit einem erfindungsgemäßen Verfahren betrieben wird. Alternativ zu der dargestellten Bauform, in der die dritte Schiene 4 von unten bestrichen wird, ist die erfindungsgemäße Lösung der Aufgabe sinngemäß auch für von oben oder seitlich zu bestreichende Stromabnehmer denkbar.

Die zuvor in den Figuren 1 bis 3 beschriebene Anordnung bleibt im Wesentlichen dieselbe, jedoch ist in den Figuren 4 bis 6 der Anschlag 6 über einen mit Druck beaufschlagbaren Zylinder 7, beispielsweise ein Hydraulik- oder Pneumatik-Zylinder, positionierbar. Der Anschlag 6 bzw. der Zylinder 7 ist dabei gegenüber dem Auflagerpunkt 3 nach oben versetzt und erstreckt sich in Richtung der dritten Schiene 4 und schließt vorzugsweise einen rechten Winkel mit einer Vertikalen ein. Durch den Zylinder 7 wird die Position des Anschlags 6 translatorisch verschoben.

So kann in Abhängigkeit der Belastung (statisch und gegebenenfalls dynamisch), welche sich als Höhenunterschied H zwischen dem Auflagerpunkt 3 und der Kontaktfläche 5 äußert, die Position des Anschlags 6 variiert werden, so dass die oben geschilderten Probleme nicht auftreten. Um die statische und/oder dynamische Belastung bzw. den Höhenunterschied H in einfacher Art und Weise bestimmen zu können, ist, üblicher Weise am Drehgestell 10, eine Vorrichtung zur Bestimmung des Federwegs einer Primärfeder des Drehgestells 10 vorgesehen. Alternativ dazu ist auch die Anordnung einer Vorrichtung zur Bestimmung des Luftdruckes einer Sekundärfeder des Drehgestells 10 denkbar, welche Vorrichtung vorzugsweise direkt am Drehgestell 10 selbst angeordnet ist. Durch die Bestimmung der charakteristischen Werte der Primär- bzw. Sekundärfederung, kann die aktuelle Belastung sehr genau bestimmt werden, ohne dass ein komplexes Messsystem notwendig ist. Durch Kenntnis des Höhenunterschieds H ohne die im Betrieb auftretende statische bzw. dynamische Belastung, lässt sich über die charakteristischen Werte ebenso der aktuelle Höhenunterschied H bestimmen. Um die Bewegung des Zylinders 7 und damit auch die Position des Anschlags 6 zu variieren, kann eine Steuereinheit vorgesehen sein, welche die Informationen der Vorrichtungen empfängt und in die entsprechende Bewegungsvorgabe für den Zylinder 7 umwandelt.

In alternativen Ausführungsvarianten der Erfindung ist der Auflagerpunkt 3 nicht direkt am Drehgestell 10, sondern auf einem Grundelement, beispielsweise einer Trägerplatte, angeordnet, wobei das Grundelement mit dem Drehgestell 10 verbunden ist. Dabei ist es auch denkbar, dass die Feder 9 und der Anschlag 6 bzw. der Zylinder 7 an dem Grundelement angeordnet sind.

Figur 5 zeigt ein Drehgestell 10 analog zu Figur 2, welches durch die statische und/oder dynamische Belastung in Richtung der dritten Schiene 4 versetzt ist, sodass der Höhenunterschied H in Bezug auf Figur 4 verringert ist. Um die bei Figur 2 beschriebene Problematik zu umgehen, wird der Anschlag 6 durch den Zylinder 7 derart positioniert, dass der Bewegungsbereich des Schwingarms 1 verkleinert wird. Der Zylinder 7 wird also ausgefahren, so dass der auskragende Abschnitt 8 des Schwingarmes 1 den Anschlag 6 kontaktiert. Durch das Ausfahren des Zylinders 7 wird also verhindert, dass der Schwingarm 1 bzw. der Schleifschuh 2 das Lichtraumprofil verletzen, indem der Anschlag 6 bezogen auf den Stand der Technik bereits bei einer früheren Position des Schwingarms 1 kontaktiert wird.

In Figur 6 ist schließlich ein Drehgestell 10 analog zu Figur 3 abgebildet, wobei das Drehgestell 10 durch eine statische und/oder dynamische Belastung in Bezug auf die dritte Schiene 4 nach unten versetzt ist, sodass der Höhenunterschied H in Bezug auf Figur 4 erhöht ist. Um die bei Figur 3 beschriebene Problematik zu umgehen, wird der Anschlag 6 durch den Zylinder 7 derart positioniert, dass der Bewegungsbereich des Schwingarms 1 vergrößert wird. Der Zylinder 7 wird also eingefahren, so dass der auskragende Abschnitt 8 den Anschlag 6 nicht kontaktiert. Durch das Einfahren des Zylinders 7 wird verhindert, dass durch das Anliegen des auskragenden Abschnittes 8 am Anschlag 6 das Anpressen des Schleifschuhs 2 an die Kontaktfläche 5 mittels Federkraft unterbunden wird und sich der Schleifschuh 2 von der Kontaktfläche 5 löst. Somit kann ein Abheben des Schleifschuhs 2 von der Kontaktfläche 5 bzw. die Ausbildung eines damit verbundenen Lichtbogens durch eine statische und/oder dynamische Belastung nahezu ausgeschlossen werden.

### Bezugszeichenliste:

- 1: Schwingarm
- 2: Schleifschuh
- 3: Auflagerpunkt
- 4: dritte Schiene
- 5: Kontaktfläche der dritten Schiene 4
- 6: Anschlag
- 7: Zylinder
- 8: auskragender Abschnitt des Schwingarms 1
- 9: Feder
- 10: Drehgestell
- H: Höhenunterschied

## Patentansprüche

1. Stromabnehmer für ein Schienenfahrzeug, mit einem an einem Schwingarm (1) angeordneten Schleifschuh (2), welcher Schwingarm (1) an einem Auflagerpunkt (3) mit dem Schienenfahrzeug verbindbar ist und der Schleifschuh (2) mittels Federkraft einer Feder (9) gegen eine Kontaktfläche (5) einer dritten Schiene (4) pressbar ist, wobei ein Anschlag (6) vorgesehen ist, um einen Bewegungsbereich des Schwingarmes (1) zu begrenzen, **dadurch gekennzeichnet, dass** die Position des Anschlags (6) während des Betriebs in Abhängigkeit von einer statischen und/oder dynamischen Belastung eines Drehgestells (10) des Schienenfahrzeuges mittels einer mit dem Anschlag (6) verbundenen Steuereinrichtung variierbar ist, um während des Betriebs die Anlage des Schleifschuhs (2) an die Kontaktfläche (5) der dritten Schiene (4) sicher zu stellen und/oder eine Kollision des Schleifschuhs (2) mit der dritten Schiene zu verhindern.

2. Stromabnehmer nach Anspruch 1, **dadurch gekennzeichnet, dass** die statische und/oder dynamische Belastung während des Betriebs als ein Höhenunterschied (H) zwischen Auflagerpunkt (3) und Kontaktfläche (5) der dritten Schiene (4) bestimmbar ist.

3. Stromabnehmer nach Anspruch 2, **dadurch gekennzeichnet, dass** eine Vorrichtung vorgesehen ist, mittels derer der Höhenunterschied (H) zwischen Auflagerpunkt (3) und Kontaktfläche (5) der dritten Schiene bestimmbar ist.

4. Stromabnehmer nach Anspruch 3, **dadurch gekennzeichnet, dass** es sich um eine Vorrichtung zur Bestimmung des Federwegs einer Primärfederung eines Drehgestells (10) von Schienenfahrzeugen handelt.

5. Stromabnehmer nach Anspruch 3, **dadurch gekennzeichnet, dass** es sich um eine Vorrichtung zur Bestimmung des Luftdruckes einer Sekundärfederung eines Drehgestells (10) von Schienenfahrzeugen handelt.

6. Stromabnehmer nach einem der Ansprüche 1 bis 5, **dadurch gekennzeichnet, dass** der Anschlag (6) relativ zum Auflagerpunkt (3) rotatorisch bewegbar ist.

7. Stromabnehmer nach einem der Ansprüche 1 bis 6, **dadurch gekennzeichnet, dass** der Anschlag (6) relativ zum Auflagerpunkt (3) translatorisch bewegbar ist.

8. Stromabnehmer nach Anspruch 7, **dadurch gekennzeichnet, dass** der Anschlag (6) über einen mit Druck beaufschlagbaren Zylinder (7) positionierbar ist.

9. Stromabnehmer nach einem der Ansprüche 1 bis 8, **dadurch gekennzeichnet, dass** der Schwingarm (1) einen auskragenden Abschnitt (8) aufweist, welcher mit dem Anschlag (6) kontaktierbar ist.

10. Stromabnehmer nach einem der Ansprüche 1 bis 9, **dadurch gekennzeichnet, dass** der Auflagerpunkt (3) an einem Grundelement, beispielsweise einer Trägerplatte, angeordnet ist, welches Grundelement mit dem Schienenfahrzeug verbindbar ist.

11. System umfassend ein Drehgestell (10) eines Schienenfahrzeuges mit einer Primärfederung, einer Sekundärfederung sowie einem Auflagerpunkt (3) und einem Stromabnehmer nach einem der Ansprüche 1 bis 10, wobei der Schwingarm (1) mit dem Auflagerpunkt (3) verbunden ist.

12. System nach Anspruch 11, **dadurch gekennzeichnet, dass** die mit dem Anschlag (6) verbundene Steuereinrichtung vorgesehen ist, um die Positionierung des Anschlages (6) zu regeln.

13. System nach Anspruch 11 oder 12, **dadurch gekennzeichnet, dass** die Vorrichtung zur Bestimmung des Federwegs der Primärfederung am Drehgestell (10) angeordnet ist und die Vorrichtung in Datenverbindung mit dem Anschlag (6) bzw. mit der Steuereinrichtung steht.

14. System nach einem der Ansprüche 11 bis 13, **dadurch gekennzeichnet, dass** die Vorrichtung zur Bestimmung des Luftdruckes der Sekundärfederung am Drehgestell (10) angeordnet ist und die Vorrichtung in Datenverbindung mit dem Anschlag (6) bzw. mit der Steuereinrichtung steht.

15. Verfahren zur Regelung eines Bewegungsbereichs eines Stromabnehmers an einem Schienenfahrzeug, der Stromabnehmer umfassend einen Schwingarm (1), welcher mittels Federkraft einer Feder (9) gegen eine Kontaktfläche (5) einer dritten Schiene (4) gepresst wird, mit einem Schleifschuh (2) zur Anlage an die dritte Schiene (4), wobei der Schwingarm (1) lagernd mit dem Schienenfahrzeug verbunden ist und die Bewegung des Schwingarms (1) durch einen Anschlag (6) begrenzt wird, **dadurch gekennzeichnet, dass** während des Betriebs folgende Verfahrensschritte durchgeführt werden:
- Detektieren einer statischen und/oder dynamischen Belastung eines Drehgestells (10) des Schienenfahrzeuges;
- Mittels einer mit dem Anschlag (6) verbundenen Steuereinrichtung positionieren des Anschlages (6) in Abhängigkeit von der statischen und/oder dynamischen Belastung des Drehgestells (10), sodass der Schleifschuh (2) an einer Kontaktfläche (5) der dritten Schiene (4) anliegt und/oder eine Kollision des Schleifschuhs (3) mit der dritten Schiene (4) verhindert wird.

16. Verfahren nach Anspruch 15, **dadurch gekennzeichnet, dass** der Anschlag (6) derart positioniert wird, dass der Bewegungsbereich des Schwingarms (1) vergrößert wird, um bei einer hohen statischen und/oder dynamischen Last das Abheben des Schleifschuhs (2) von der Kontaktfläche (5) zu verhindern.

17. Verfahren nach Anspruch 16, **dadurch gekennzeichnet, dass** der Anschlag (6) durch einen mit Druck beaufschlagbaren Zylinder (7) ausgebildet ist und der Zylinder (7) zur Vergrößerung der Bewegungsgrenze eingefahren wird.

18. Verfahren nach einem der Ansprüche 15 bis 17, **dadurch gekennzeichnet, dass** der Anschlag (6) derart positioniert wird, dass der Bewegungsbereich des
Schwingarmes (1) verkleinert wird, um bei einer geringen statischen und/oder dynamischen Last eine Kollision des Schleifschuhs (2) mit der dritten Schiene (4) zu verhindern.

19. Verfahren nach Anspruch 18, **dadurch gekennzeichnet, dass** der Anschlag (6) durch einen mit Druck beaufschlagbaren Zylinder (7) ausgebildet ist und der Zylinder (7) zur Verkleinerung der Bewegungsgrenze ausgefahren wird.

20. Verfahren nach einem der Ansprüche 15 bis 19, **dadurch gekennzeichnet, dass** der Federweg einer Primärfederung des Drehgestells (10) des Schienenfahrzeuges gemessen wird, um die statische und/oder dynamische Belastung zu detektieren.

21. Verfahren nach einem der Ansprüche 15 bis 19, **dadurch gekennzeichnet, dass** der Luftdruck einer Sekundärfederung des Drehgestells (10) des Schienenfahrzeuges gemessen wird, um die statische und/oder dynamische Belastung zu detektieren.

## Claims

1. Current collector for a rail vehicle, having a collector shoe (2) arranged on a swing arm (1), which swing arm (1) can be connected at a support point (3) to the rail vehicle and the collector shoe (2) can be pressed against a contact surface (5) of a third rail (4) by means of spring force of a spring (9), wherein a stop (6) is provided in order to limit a range of movement of the swing arm (1), **characterised in that** during operation the position of the stop (6) can be varied as a function of a static and/or dynamic load of a bogie (10) of the rail vehicle by means of a control facility connected to the stop (6), in order to ensure that the collector shoe (2) rests against the contact surface (5) of the third rail (4) during operation and/or to prevent the collector shoe (2) from colliding with the third rail.

2. Current collector according to claim 1, **characterised in that** during operation the static and/or dynamic load can be determined as a height difference (H) between the support point (3) and contact surface (5) of the third rail (4).

3. Current collector according to claim 2, **characterised in that** an apparatus is provided, by means of which the height difference (H) between the support point (3) and contact surface (5) of the third rail can be determined.

4. Current collector according to claim 3, **characterised in that** this is an apparatus for determining the spring deflection of a primary suspension of a bogie (10) in rail vehicles.

5. Current collector according to claim 3, **characterised in that** this is an apparatus for determining the air pressure of a secondary suspension of a bogie (10) in rail vehicles.

6. Current collector according to one of claims 1 to 5, **characterised in that** the stop (6) can be moved rotationally relative to the support point (3).

7. Current collector according to one of claims 1 to 6, **characterised in that** the stop (6) can be moved translationally relative to the stop point (3).

8. Current collector according to claim 7, **characterised in that** the stop (6) can be positioned by way of a cylinder (7) to which pressure can be applied.

9. Current collector according to one of claims 1 to 8, **characterised in that** the swing arm (1) has a projecting portion (8), which can make contact with the stop (6).

10. Current collector according to one of claims 1 to 9, **characterised in that** the support point (3) is arranged on a base element, for instance a carrier plate, which base element can be connected to the rail vehicle.

11. System comprising a bogie (10) of a rail vehicle with a primary suspension, a secondary suspension and a support point (3) and a current collector according to one of claims 1 to 10, wherein the swing arm (1) is connected to the support point (3).

12. System according to claim 11, **characterised in that** the control facility connected to the stop (6) is provided in order to regulate the positioning of the stop (6).

13. System according to claim 11 or 12, **characterised in that** the apparatus for determining the spring deflection of the primary suspension is arranged on the bogie (10) and the apparatus has a data connection with the stop (6) or with the control facility.

14. System according to one of claims 11 to 13, **characterised in that** the apparatus for determining the air pressure of the secondary suspension is arranged on the bogie (10) and the apparatus has a data connection with the stop (6) or with the control facility.

15. Method for regulating a range of movement of a current collector on a rail vehicle, the current collector comprising a swing arm (1), which is pressed by means of spring force of a spring (9) against a contact surface (5) of a third rail (4), having a collector shoe (2) that rests against the third rail (4), wherein the swing arm (1) is connected in a supporting manner with the rail vehicle and the movement of the swing arm (1) is limited by a stop (6), **characterised in that** during operation the following method steps are carried out:
- detecting a static and/or dynamic load of a bogie (10) of the rail vehicle;
- by means of a control facility connected to the stop (6), positioning the stop (6) as a function of the static and/or dynamic load of the bogie (10) so that the collector shoe (2) rests against a contact surface (5) of the third rail (4) and/or a collision between the collector shoe (3) and the third rail (4) is prevented.

16. Method according to claim 15, **characterised in that** the stop (6) is positioned such that the range of movement of the swing arm (1) is increased in order to prevent the removal of the collector arm (2) from the contact surface (5) for a high static and/or dynamic load.

17. Method according to claim 16, **characterised in that** the stop (6) is embodied by a cylinder (7) to which pressure can be applied and the cylinder (7) is retracted in order to increase the movement limit.

18. Method according to one of claims 15 to 17, **characterised in that** the stop (6) is positioned such that the range of movement of the swing arm (1) is decreased in order to prevent the collector shoe (2) from colliding with the third rail (4) for a low static and/or dynamic load.

19. Method according to claim 18, **characterised in that** the stop (6) is embodied by a cylinder (7) to which pressure can be applied and the cylinder (7) is deployed in order to decrease the movement limit.

20. Method according to one of claims 15 to 19, **characterised in that** the spring deflection of a primary suspension of the bogie (10) of the rail vehicle is measured in order to detect the static and/or dynamic load.

21. Method according to one of claims 15 to 19, **characterised in that** the air pressure of a secondary suspension of the bogie (10) of the rail vehicle is measured in order to detect the static and/or dynamic load.

## Revendications

1. Pantographe pour un véhicule sur rails, avec un sabot (2) disposé au niveau d'un bras oscillant (1), lequel bras oscillant (1) peut être raccordé au véhicule sur rails au niveau d'un point d'appui (3) et le sabot (2) peut être appuyé contre une surface de contact (5) d'un troisième rail (4) au moyen d'une force de ressort d'un ressort (9), dans lequel une butée (6) est prévue pour délimiter une zone de mouvement du bras oscillant (1), **caractérisé en ce que** la position de la butée (6) peut varier pendant le fonctionnement en fonction d'une charge statique et/ou dynamique d'un bogie (10) du véhicule sur rails au moyen d'un dispositif de commande raccordé à la butée (6) pour sécuriser pendant le fonctionnement l'installation du sabot (2) au niveau de la surface de contact (5) du troisième rail (4) et/ou empêcher une collision du sabot (2) avec le troisième rail.

2. Pantographe selon la revendication 1, **caractérisé en ce que** la charge statique et/ou dynamique pendant le fonctionnement en tant que différence de hauteur (H) entre le point d'appui (3) et la surface de contact (5) du troisième rail (4) peut être déterminée.

3. Pantographe selon la revendication 2, **caractérisé en ce qu'**un dispositif est prévu, au moyen duquel la différence de hauteur (H) entre le point d'appui (3) et la surface de contact (5) du troisième rail peut être déterminée.

4. Pantographe selon la revendication 3, **caractérisé en ce qu'**il s'agit d'un dispositif destiné à la détermination de la course de ressort d'une suspension primaire d'un bogie (10) de véhicules sur rails.

5. Pantographe selon la revendication 3, **caractérisé en ce qu'**il s'agit d'un dispositif destiné à la détermination de la pression d'air d'une suspension secondaire d'un bogie (10) de véhicules sur rails.

6. Pantographe selon l'une des revendications 1 à 5, **caractérisé en ce que** la butée (6) est mobile par rotation par rapport au point d'appui (3).

7. Pantographe selon l'une des revendications 1 à 6, **caractérisé en ce que** la butée (6) est mobile par translation par rapport au point d'appui (3).

8. Pantographe selon la revendication 7, **caractérisé en ce que** la butée (6) peut être positionnée au-dessus d'un cylindre (7) qui peut être alimenté en pression.

9. Pantographe selon l'une des revendications 1 à 8, **caractérisé en ce que** le bras oscillant (1) présente une section en surplomb (8) qui peut être mise en contact avec la butée (6).

10. Pantographe selon l'une des revendications 1 à 9, **caractérisé en ce que** le point d'appui (3) est disposé au niveau d'un élément de base, de préférence une plaque de support, lequel élément de base peut être raccordé au véhicule sur rails.

11. Système comprenant un bogie (10) d'un véhicule sur rails avec une suspension primaire, une suspension secondaire ainsi qu'un point d'appui (3) et un pantographe selon l'une des revendications 1 à 10, dans lequel le bras oscillant (1) est raccordé au point d'appui (3).

12. Système selon la revendication 11, **caractérisé en ce que** le dispositif de commande raccordé à la butée (6) est prévu pour régler le positionnement de la butée (6).

13. Système selon la revendication 11 ou 12, **caractérisé en ce que** le dispositif destiné à la détermination de la course de ressort de la suspension primaire est disposé au niveau du bogie (10) et le dispositif est en connexion de données avec la butée (6) resp. avec le dispositif de commande.

14. Système selon l'une des revendications 11 à 13, **caractérisé en ce que** le dispositif destiné à la détermination de la pression d'air de la suspension secondaire est disposé au niveau du bogie (10) et le dispositif est en connexion de données avec la butée (6) resp. avec le dispositif de commande.

15. Procédé destiné au réglage d'une zone de mouvement d'un pantographe au niveau d'un véhicule sur rails, le pantographe comprenant un bras oscillant (1) qui est appuyé au moyen d'une force de ressort d'un ressort (9) contre une surface de contact (5) d'un troisième rail (4), avec un sabot (2) destiné à l'installation au niveau du troisième rail (4), dans lequel le bras oscillant (1) est raccordé au véhicule sur rails par entreposage et le mouvement du bras oscillant (1) est délimité par le biais d'une butée (6), **caractérisé en ce que** pendant le fonctionnement les étapes de procédé suivantes sont menées à bien :
- détection d'une charge statique et/ou dynamique d'un bogie (10) du véhicule sur rails ;
- positionnement de la butée (6) en fonction de la charge statique et/ou dynamique du bogie (10) au moyen d'un dispositif de commande raccordé à la butée (6), de sorte que le sabot (2) est installé au niveau d'une surface de contact (5) du troisième rail (4) et/ou une collision du sabot (3) avec le troisième rail (4) est empêchée.

16. Procédé selon la revendication 15, **caractérisé en ce que** la butée (6) est positionnée de telle sorte que la zone de mouvement du bras oscillant (1) est agrandie pour empêcher le levage du sabot (2) par la surface de contact (5) en présence d'une charge statique et/ou dynamique élevée.

17. Procédé selon la revendication 16, **caractérisé en ce que** la butée (6) est réalisée par le biais d'un cylindre (7) qui peut être alimenté en pression et le cylindre (7) est rétracté en vue de l'agrandissement de la limite de mouvement.

18. Procédé selon l'une des revendications 15 à 17, **caractérisé en ce que** la butée (6) est positionnée de telle sorte que la zone de mouvement du bras oscillant (1) est rétrécie pour empêcher une collision du sabot (2) avec le troisième rail (4) en présence d'une charge statique et/ou dynamique faible.

19. Procédé selon la revendication 18, **caractérisé en ce que** la butée (6) est réalisée par le biais d'un cylindre (7) qui peut être alimenté en pression et le cylindre (7) est déployé en vue du rétrécissement de la zone de mouvement.

20. Procédé selon l'une des revendications 15 à 19, **caractérisé en ce que** la course de ressort d'une suspension primaire du bogie (10) du véhicule sur rails est mesurée pour détecter la charge statique et/ou dynamique.

21. Procédé selon l'une des revendications 15 à 19, **caractérisé en ce que** la pression d'air d'une suspension secondaire du bogie (10) du véhicule sur rails est mesurée pour détecter la charge statique et/ou dynamique.
